# EUROPÄISCHE PATENTSCHRIFT

(11) **EP 0 809 766 B1**
(45) Veröffentlichungstag und Bekanntmachung des Hinweises auf die Patenterteilung: **10.03.1999**
(21) Anmeldenummer: 95942161.1
(22) Anmeldetag: 14.12.1995
(51) Int. Cl.: F16H 63/18, F16H 63/22

(54) **SCHALTVORRICHTUNG FÜR EIN SCHALTGETRIEBE**
SHIFT DEVICE FOR A GEARBOX
DISPOSITIF DE MANOEUVRE POUR UNE BOITE DE VITESSES

(30) Priorität: 17.02.1995 DE 19505323
(43) Veröffentlichungstag der Anmeldung: 03.12.1997
(73) Patentinhaber: Dr.Ing.h.c. F. Porsche Aktiengesellschaft, 70435 Stuttgart (DE)
(72) Erfinder: FUCHS, Robert, D-75446 Wiernsheim (DE)
(86) Internationale Anmeldenummer: EP9504956
(87) Internationale Veröffentlichungsnummer: WO9625613

(56) Entgegenhaltungen:
- DE-A- 1 405 913
- DE-A- 4 205 671
- US-A- 1 500 878

## Beschreibung

Die Erfindung geht aus von einer Schaltvorrichtung für ein Schaltgetriebe nach der Gattung des Hauptanspruches.

Aus der DE-42 05 671 A1 ist ein gattungsgemäßes Schaltgetriebe bekannt, bei dem einzelne Getriebegänge durch das Zusammenwirken mehrerer Zahnradpaare (Gruppenschaltung) geschaltet werden. Für den Schaltvorgang ist dabei das Betätigen zweier Synchronisiervorgänge erforderlich. Um den eigentlichen Schaltvorgang in möglichst kurzer Zeit durchführen zu können, sollten die beiden Synchronisiervorgänge möglichst gleichzeitig erfolgen.

Aus der EP 0 547 007 A1 ist eine Schaltvorrichtung bekannt, bei der die Schaltelemente (Synchronisierkupplungen) eines Schaltgetriebes über Schaltgabeln bewegt werden, die wiederum von einer rotatorisch bewegten Schaltwalze verschoben werden. Dazu wird ein Führungsarm der Schaltgabel in einer Führungsbahn der Schaltwalze bewegt. Durch Zusammenwirken des Führungsarmes und der Führungsbahn wird die rotatorische Bewegung der Schaltwalze in eine axiale Verschiebung der Schaltgabel überführt. Bei einer derartigen Schaltvorrichtung werden zwar mehrere Schaltgabeln des Schaltgetriebes in nebeneinander verlaufenden Führungsbahnen der Schaltwalze geführt und von diesen bewegt, ein gleichzeitiges Bewegen zweier Schaltgabeln und damit zweier Synchronisierkupplungen ist nicht ohne weiteres möglich. Da aufgrund von Bauteil- und Fertigungstoleranzen die Betätigungswege der Synchronisierkupplungen bzw. Schaltgabeln nicht vollkommen gleich sind, kann es vorkommen, daß eine Synchronisierkupplung bereits vollständig eingelegt ist, während die andere noch nicht den gesamten Betätigungsweg zurückgelegt hat. Aufgrund der für eine exakte Betätigung notwendigen engen Führung der Führungsarme in den Führungsbahnen ist ein Toleranzausgleich nicht möglich.

Der Erfindung liegt demgegenüber die Aufgabe zugrunde, eine Schaltbetätigung für ein Schaltgetriebe auszubilden, bei dem zum Schalten wenigstens eines Getriebeganges zwei Schaltelemente (Synchronisierkupplungen) gleichzeitig bewegt werden müssen. Der Schaltvorgang soll dabei sicher durchgeführt werden, wobei die aufgrund von Bauteil- und Fertigungstoleranzen auftretenden Wegunterschiede bei der Betätigung der einzelnen Schaltelemente ausgeglichen werden sollen.

Diese Aufgabe wird erfindungsgemäß mit den kennzeichnenden Merkmalen des Hauptanspruches gelöst. Durch Unterbringung der Schaltbahnen auf mindestens zwei separaten Rotorelementen, zwischen denen ein Ausgleichselement angeordnet ist, ist eine ausreichende Trennung der beiden Einzelschaltvorgänge möglich, da die starre Kopplung der zu bewegenden Schaltelemente entfällt. Durch das Ausgleichselement zwischen den beiden separaten Rotorelementen ist ein Wegausgleich möglich, der die unterschiedlichen Betätigungswege der beiden Schaltelemente ausgleicht.

Die Schaltvorrichtung läßt sich besonders einfach und mit geringem Bauteilaufwand herstellen, wenn die mindestens zwei separaten Rotorelemente auf einer gemeinsamen Welle geführt sind und von dieser bewegt werden.

Der Ausgleich der unterschiedlichen Betätigungswege der beiden gleichzeitig zu betätigenden Schaltelemente wird auf besonders einfache Weise ermöglicht, wenn eines der beiden Rotorelemente drehfest, aber axial verschieblich, auf der Schaltwelle angeordnet ist und das zwischen den Rotorelementen angeordnete Ausgleichselement ein Federelement ist. Damit ist einerseits ein Weiterdrehen des axial festen Rotorelementes bzw. der Schaltwelle möglich, wenn der mit dem axial verschieblichen Rotorelement betätigte Einzelschaltvorgang bereits durchgeführt ist. Andererseits kann aufgrund der axialen Verschiebbarkeit des einen Rotorelementes der damit ausgeführte Einzelschaltvorgang zu Ende geführt werden, wenn der zweite Einzelschaltvorgang bereits ausgeführt ist. Der Restweg des Schaltelementes (Synchronisierkupplung), der für den Betätigungsvorgang erforderlich ist, kann vom axial beweglichen Schaltelement nachgeführt werden.

Ein Toleranzausgleich in beide Richtungen ist in besonders vorteilhafter Weise möglich, wenn das axial verschiebliche Rotorelement von einander entgegengesetzt wirkenden Federelementen beaufschlagt wird, wobei es durch die beiden Federelemente in einer vorgespannten Neutral lage gehalten und gegen die Wirkung eines Federelementes in jede der beiden axialen Richtungen verschieblich ist.

In besonders vorteilhafter Ausgestaltung der Erfindung ist eine Einstellung der Neutral lage des axial verschieblichen Rotorelementes auf einfache Weise möglich, wenn zumindest die Federelemente als Druckfeder ausgebildet sind, deren axiale Ausdehnung durch Begrenzungsmittel festgelegt ist. Durch diese Festlegung der axialen Ausdehnung ist eine genaue Endlage zugeordnet, die der Mittel- bzw. Neutral lage des axial beweglichen Rotorelementes entspricht. Eine aufwendige Einstellung der zusammenwirkenden Federelemente bzw. ein Ausgleich unterschiedlicher Federvorspannungen bzw. Federkennlinien ist nicht erforderlich.

Weitere Vorteile und vorteilhafte Weiterbildungen der Erfindung ergeben sich aus den Unteransprüchen und der Beschreibung.

Ein Ausführungsbeispiel der Erfindung ist in der nachfolgenden Beschreibung und Zeichnung näher erläutert. Letztere zeigt in
- Fig. 1: eine schematische Darstellung eines Schaltgetriebes,
- Fig. 2: eine nur teilweise dargestellte Schnittdarstellung der Schaltvorrichtung.

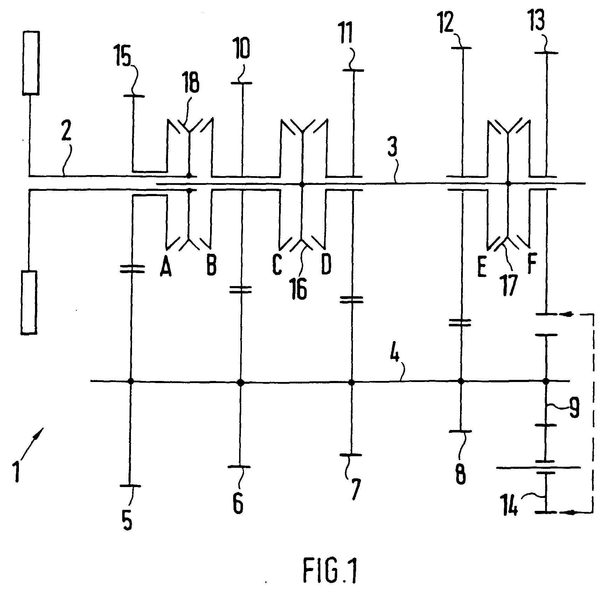

Das in Fig. 1 schematisch dargestellte Schaltgetriebe 1 hat eine als Hohlwelle ausgebildete Eingangswelle 2, eine achsparallel dazu verlaufende und teilweise in der Hohlwelle 2 geführte Ausgangswelle 3 und eine achsparallel zu beiden geführte Zwischenwelle 4. Auf der Zwischenwelle 4 sind fünf Zahnräder 5 bis 9 drehfest angebracht. Auf der Ausgangswelle 3 sind vier Losräder 10 bis 13 geführt, wobei das Losrad 10 mit dem Zahnrad 6, das Losrad 11 mit dem Zahnrad 7 und das Losrad 12 mit dem Zahnrad 8 kämmt. Das Losrad 13 kämmt über ein Zwischenrad 14, das unter anderem zur Betätigung des Rückwärtsganges dient, mit dem festen Zahnrad 9. Ein weiteres Losrad 15 ist auf der Eingangswelle 2 gelagert und kämmt mit dem festen Zahnrad 5. Auf der Ausgangswelle 3 sind zwei Synchronisierkupplungen 16 und 17 drehfest gelagert, von denen die Synchronisierkupplung 16 mit dem Losrad 10 (Einzelschaltvorgang C) und dem Losrad 11 (Einzelschaltvorgang D) zusammenwirkt. Die Synchronisierkupplung 17 wirkt mit dem Losrad 12 (Einzelschaltvorgang E) und dem Losrad 13 (Einzelschaltvorgang F) zusammen. Eine dritte Synchronisierkupplung 18 ist auf der Eingangswelle 2 drehfest gelagert und wirkt einerseits mit dem Losrad 15 (Einzelschaltvorgang A) und andererseits mit dem Losrad 10 (Einzelschaltvorgang B) zusammen.

Die Synchronisierkupplungen 16 bis 18 sind jeweils drehfest aber auch axial verschieblich auf der Eingangswelle 2 bzw. der Ausgangswelle 3 gelagert. Durch axiales Verschieben der Synchronisierkupplungen werden über die entsprechenden Einzelschaltvorgänge die jeweils zugeordneten Losräder drehfest mit der Welle verbunden. Zum Einlegen des ersten Ganges ist beispielsweise die Betätigung der Synchronisierkupplung 18 und der Synchronisierkupplung 17 erforderlich. Dabei wird die Synchronisierkupplung 18 mit dem Losrad 15 (Einzelschaltvorgang A) in Eingriff gebracht und die Synchronisierkupplung 17 über den Einzelschaltvorgang E mit dem Losrad 12. Der Kraftfluß durch das Schaltgetriebe 1 ergibt sich in anschaulicher Weise direkt aus der Darstellung gemäß Fig. 1. Auf die ausführliche Darstellung des gesamten Schaltschemas wird nicht näher eingegangen, da dieses nicht erfindungswesentlich ist. Es ergibt sich jedoch aus der in Fig. 1 dargestellten Getriebeanordnung ohne weiteres und ist beispielsweise in der eingangs angeführten DE 42 05 671 A1 näher erläutert. Es ist jedoch ohne weiteres möglich, mit der im nachfolgenden näher beschriebenen Schaltvorrichtung auch andere Schaltgetriebe zu betätigen, bei denen mindestens ein Getriebegang durch gleichzeitiges Betätigen zweier Einzelschaltvorgänge (Synchronisiervorgänge) eingelegt wird.

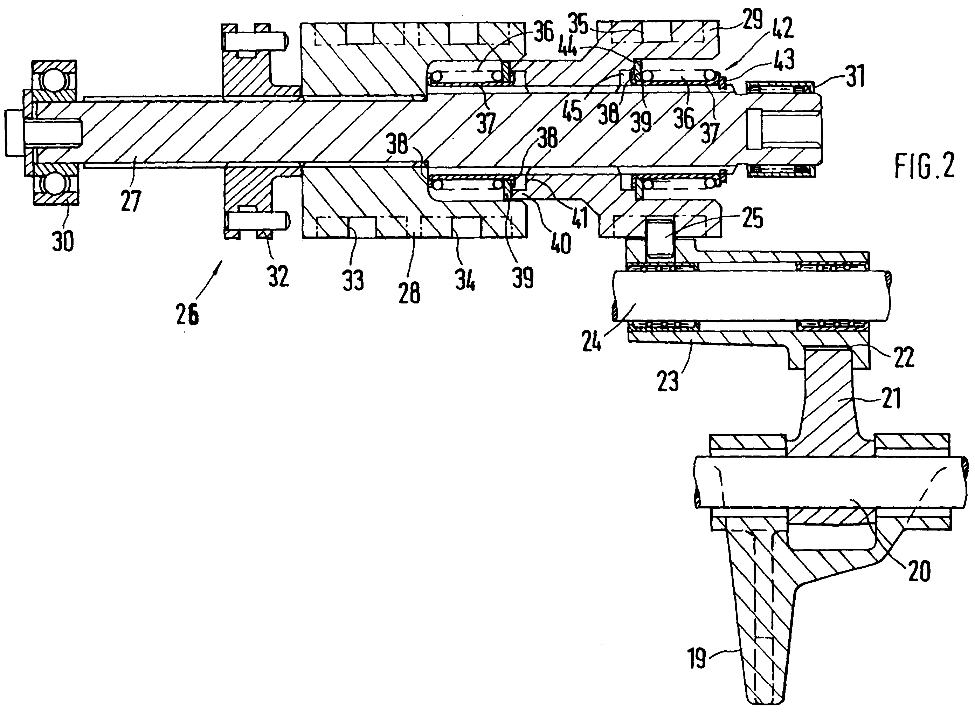

Die Synchronisierkupplungen 16 bis 18 sind - wie bereits angeführt - drehfest. aber axial verschieblich, auf den zugeordneten Wellen 2, 3 gelagert. Die Betätigung der Einzelschaltvorgänge erfolgt auf an sich bekannte Weise durch axiales Verschieben von mit den Synchronisierkupplungen zusammenwirkenden Schaltgabeln 19, von denen in Fig. 2 der Übersichtlichkeit halber nur eine einzige dargestellt ist. Diese Schaltgabel 19 ist auf einer Schaltstange 20 befestigt, die über einen Schaltfinger 21, der in einer Führungsnut 22 eines Zwischengliedes 23 geführt ist, axialverschieblich ist. Das Zwischenglied 23 ist hülsenförmig ausgebildet und auf einer Führungsstange 24 gelagert und axial auf dieser beweglich. Das Zwischenglied 23 ist über einen Führungsbolzen 25 mit der Schaltvorrichtung 26 verbunden.

Die Schaltvorrichtung 26 besteht im wesentlichen aus einer Schaltwelle 27 und zwei Rotorelementen 28 und 29. Die Schaltwelle 27 ist endseitig mit zwei Lagern 30, 31 im nicht näher dargestellten Getriebegehäuse des Schaltgetriebes gelagert. Durch ein an und für sich bekanntes Schrittschaltwerk, von dem hier nur der mit der Schaltwelle 27 drehfest verbundene Mitnehmerteil 32 dargestellt ist, wird die Schaltwelle schrittweise verdreht. Statt der Verdrehung durch ein mechanisches Schrittschaltwerk kann die Verdrehung der Schaltwelle auch elektromotorisch erfolgen. Auf der Schaltwelle 27 ist das erste Rotorelement 28 befestigt. Dieses hat an seinem Außenumfang zwei umlaufende Führungsbahnen 33 und 34, die entweder direkt mit einem Schaltfinger 21 oder indirekt über ein Zwischenglied 23 mit jeweils einer Schaltgabel 19 zusammenwirken. Über die Führungsbahn 33 wird dabei die Synchronisierkupplung 18 betätigt, während die Führungsbahn 34 mit der Synchronisierkupplung 16 zusammenwirkt. Das zweite Rotorelement 29 ist drehfest aber axial verschieblich auf der Schaltwelle 27 gelagert. An seinem Außenumfang ist eine umlaufende Führungsbahn 35 ausgebildet, in der der Führungsbolzen 25 des Zwischengliedes 23 geführt ist. Zwischen dem ersten Rotorelement 28 und dem zweiten Rotorelement 29 ist ein gefangenes Federelement 36 angeordnet, dessen axiale Ausdehnung durch ein Ringelement 37 mit umlaufenden Schultern 38 begrenzt ist. Das Federelement 36 liegt unter Zwischenlage einer der beiden Schultern 38 am ersten Rotorelement 28 an. Auf der gegenüberliegenden Seite liegt das Federelement 36 unter Zwischenlage eines Sicherungsringes 39 einerseits an der Schulter 38 und andererseits an einem umlaufenden Vorsprung 40 des zweiten Rotorelementes an. Durch die axiale Erstreckung des umlaufenden Vorsprunges 40 am zweiten Rotorelement 29 wird dessen axialer Verschiebeweg in Richtung auf das erste Rotorelement 28 begrenzt, indem das Rotorelement 29 mit seiner inneren Stirnseite 41 zur Anlage an das Ringelement 37 kommt.

An der gegenüberliegenden Stirnseite ist ein analog aufgebautes Ausgleichselement 42 angebracht, das ebenfalls aus einem Federelement 36, einem Ringelement 37 mit Schultern 38 und einem Sicherungsring 39 besteht. Das Federelement 36 liegt unter Zwischenlage einer Schulter 38 des Ringelementes 37 einerseits an einem in die Schaltwelle 27 eingesetzten Sicherungsring 43 an. An der gegenüberliegenden Seite liegt das Federelement 36 unter Zwischenlage des Sicherungsringes 39 einerseits an einer umlaufenden Schulter 44 des zweiten Rotorelementes 29 an. Andererseits liegt das Federelement 36 unter Zwischenlage dieses Sicherungsringes 39 an der Schulter 38 des Sicherungsringes an. Die dem zweiten Rotorelement 29 zugewandte Schulter 38 des Ringelementes 37 kann in eine umlaufende Ausnehmung 45 des Rotorelementes 29 eintauchen. Die axiale Erstreckung dieser Ausnehmung 45 begrenzt analog zum umlaufenden Vorsprung 40 den Verschiebeweg des Rotorelementes 29, nachdem das Rotorelement zur Anlage an das rechte Ringelement 37 kommt.

Durch die Einspannung des axial beweglichen Rotorelementes 29 ist eine federzentrierte Mittellage vorgegeben. Durch Ausbildung der Federelemente als gefangene Federn ist die Mittellage des axial beweglichen Rotorelementes 29 leicht einstellbar, ohne daß eventuell unterschiedliche Federkennlinien bzw. Federvorspannungen berücksichtigt werden müssen. Durch die axiale Beweglichkeit des Rotorelementes 29 ist ein Ausgleich der unterschiedlichen Betätigungswege bei gleichzeitig ablaufenden Einzelschaltvorgängen möglich. Ist am Beispiel des zuvor geschilderten ersten Ganges der mit der Führungsbahn 33 zusammenwirkende Einzelschaltvorgang A zuerst abgeschlossen, kann der Einzelschaltvorgang E sicher aufgrund der an und für sich bekannten ziehenden Wirkung der Synchronisierkupplung zu Ende geführt werden. Ist dagegen der Einzelschaltvorgang E zuerst abgeschlossen, ist ein Weiterdrehen der Schaltwelle 27 möglich, wobei das Rotorelement 29 aufgrund des Zusammenwirkens von Führungsbahn 35 und Führungsbolzen 25 axial verschoben wird, während gleichzeitig der Restschaltweg des Einzelschaltvorganges A durch Weiterdrehen des Rotorelementes 28 fortgesetzt wird.

Im Gegensatz zum hier dargestellten Ausführungsbeispiel ist es möglich, eine, mehrere oder alle Schaltgabeln direkt mit einem der Rotorelemente zu koppeln. Es ist auch möglich, anstelle der Schaltgabeln die Schaltbetätigung beispielsweise über Schwinggabeln vorzunehmen, wobei diese ebenfalls direkt oder indirekt mit der Führungsbahn eines der Rotorelemente gekoppelt sind.

Um einen Ausgleich der unterschiedlichen Schaltbetätigungswege in jedem Schaltvorgang zu ermöglichen, sollten die Führungsbahnen so den einzelnen Rotorelementen zugeordnet werden, daß bei jedem Schaltvorgang mit gleichzeitiger Betätigung zweier Schaltelemente beide Rotorelemente bzw. eine der darauf angeordneten Führungsbahnen wirksam ist. Sind - wie im Ausführungsbeispiel dargestellt - auf einem der Rotorelemente mehrere Führungsbahnen angeordnet, sollte sichergestellt sein, daß kein Schaltvorgang erforderlich ist, bei dem die zwei den Einzelschaltvorgängen zugeordneten Schaltelemente durch auf einem Rotorelement angeordnete Führungsbahnen bewegt werden müssen

## Patentansprüche

1. Schaltvorrichtung zur Betätigung von Schaltelementen (16, 17, 18) eines Schaltgetriebes mit
- mindestens zwei Schaltelementen (18, 17 oder 18, 16), die zwei zueinander koaxialen Getriebewellen zugeordnet und zum Schalten von Getriebegängen entlang dieser Wellen axial verschiebbar sind, wobei mindestens ein Getriebegang durch gleichzeitiges Betätigen der zwei Schaltelemente (18, 17 oder 18, 16) eingelegt oder gelöst wird, und mit
- einem drehbaren Schaltrotor (28, 29), der mindestens zwei Schaltbahnen (33 - 35) aufweist, welche mit Übertragungsmitteln (19 - 25) zur Umsetzung der Drehbewegung des Schaltrotors in eine translatorische Bewegung der beiden Schaltelemente (18, 17 oder 18, 16) zusammenwirken,
**gekennzeichnet durch folgende weitere Merkmale**:
- der Schaltrotor besteht aus zwei separaten drehbaren und zueinander axial verschieblichen Rotorelementen (28, 29), auf denen die mindestens zwei Schaltbahnen ausgebildet sind, und
- ein Ausgleichselement (36 - 39) ist zwischen den beiden Rotorelementen (28 und 29) angeordnet.

2. Schaltvorrichtung nach Anspruch 1, dadurch gekennzeichnet, daß die beiden Rotorelemente auf einer gemeinsamen Schaltwelle (27) angeordnet sind, und das ein Rotorelement fest auf mit der Schaltwelle verbunden ist.

3. Schaltvorrichtung nach Anspruch 1 oder 2, dadurch gekennzeichnet, daß die beiden Rotorelemente drehfest miteinander verbunden sind, und daß das Ausgleichselement ein Federelement (36) enthält.

4. Schaltvorrichtung nach einem der vorangehenden Ansprüche, dadurch gekennzeichnet, daß das axial verschiebliche Rotorelement (29) in axialer Richtung von einander entgegengesetzt wirkenden Federelementen (36) beaufschlagt ist.

5. Schaltvorrichtung nach einem der vorangehenden Ansprüche, dadurch gekennzeichnet, daß zumindest eines der Federelemente (36) als Druckfeder ausgebildet ist, dessen axiale Ausdehnung durch Begrenzungsmittel (32) begrenzt ist.

6. Schaltvorrichtung nach einem der vorangehenden Ansprüche, dadurch gekennzeichnet, daß die axiale Verschiebung des verschieblichen Rotorelements (29) durch Anschläge (40, 45) begrenzt ist.

7. Schaltvorrichtung nach einem der vorangehenden Ansprüche, dadurch gekennzeichnet, daß die beiden Rotorelemente (28, 29) hülsenförmig ausgebildet sind, die sich in ihrer axialen Erstreckung zumindest teilweise überdecken.

## Claims

1. A shifting device for actuating gear-shift members (16, 17, 18) of a manual gearbox, with
- at least two gear-shift members (18, 17 or 18, 16) which are associated with two mutually coaxial gearbox shafts and which are axially displaceable along the said shafts in order to shift gears, wherein at least one gear is engaged or released by simultaneously actuating the two gear-shift members (18, 17 or 18, 16), and with
- a rotatable gear-shift rotor (28, 29) comprising at least two gear-shift paths (33 to 35) which cooperate with transmission means (19 to 25) for converting the rotational movement of the gear-shift rotor into a translatory movement of the two gear-shift members (18, 17 or 18, 16),
**characterized by the following further features**:
- the gear-shift rotor comprises two separate rotatable rotor members (28, 29) which are axially displaceable with respect to each other and on which the at least two gear-shift paths are formed, and
- an equalizing member (36 to 39) is arranged between the two rotor members (28 and 29).

2. A shifting device according to Claim 1, **characterized in that** the two rotor members are arranged on a common gear-shift shaft (27), and one rotor member is rigidly connected to the gear-shift shaft.

3. A shifting device according to Claim 1 or 2, **characterized in that** the two rotor members are connected to each other in a rotationally fixed manner, and the equalizing member contains a spring member (36).

4. A shifting device according to one of the preceding Claims, **characterized in that** the axially displaceable rotor member (29) is acted upon in the axial direction by spring members (36) acting in opposite directions to one another.

5. A shifting device according to one of the preceding Claims, **characterized in that** at least one of the spring members (36) is in the form of a compression spring, the axial extension of which is bounded by limiting means (32).

6. A shifting device according to one of the preceding Claims, **characterized in that** the axial displacement of the displaceable rotor member (29) is bounded by stops (40, 45).

7. A shifting device according to one of the preceding Claims, **characterized in that** the two rotor members (28, 29) are in the form of sleeves which are covered in their axial extension at least in part.

## Revendications

1. Dispositif de changement de vitesse pour l'actionnement d'éléments de commutation (16, 17, 18) d'une boîte de vitesses comportant
- au moins deux éléments de commutation (18, 17 ou 18, 16), qui sont associés à deux arbres de transmission coaxiaux entre eux et qui peuvent coulisser axialement le long de ces arbres pour le changement de rapports de transmission, un rapport de transmission au moins étant enclenché ou supprimé par actionnement simultané des deux éléments de commutation (18, 17 ou 18, 16), et comportant
- un rotor de changement de vitesse (28, 29) rotatif, qui présente au moins deux voies de commutation (33 à 35), qui coopèrent avec des moyens de transmission (19 à 25) pour la conversion du mouvement de rotation du rotor de changement de vitesse en un mouvement de translation des deux déléments de changement de vitesse (18, 17 ou 18, 16),
caractérisé par les autres caractéristiques suivantes:
- le rotor de changement de vitesse est constitué de deux éléments de rotor (28, 29) séparés, tournants et coulissant axialement l'un par rapport à l'autre, sur lesquels sont formées les deux voies de changement de vitesse ou plus, et
- un élément de compensation (36 à 39) est disposé entre les deux éléments de rotor (28 et 29).

2. Dispositif de changement de vitesse selon la revendication 1, caractérisé en ce que les deux éléments de rotor sont disposés sur un arbre de changement de vitesse (27) commun, et en ce qu'un élément de rotor est relié fixement sur l'arbre de changement de vitesse.

3. Dispositif de changement de vitesse selon la revendication 1 ou 2, caractérisé en ce que les deux éléments de rotor sont reliés solidairement en rotation entre eux, et en ce que l'élément de compensation contient un élément à ressort (36).

4. Dispositif de changement de vitesse selon l'une des revendications précédentes, caractérisé en ce que l'élément de rotor (29) coulissant axialement est sollicité axialement par des éléments à ressort (36) agissant en sens opposé.

5. Dispositif de changement de vitesse selon l'une des revendications précédentes, caractérisé en ce qu'au moins l'un des éléments à ressort (36) est conformé en ressort de compression, dont l'extension axiale est limitée par des moyens de limitation (32).

6. Dispositif de changement de vitesse selon l'une des revendications précédentes, caractérisé en ce que le coulissement axial de l'élément de rotor (29) coulissant est limité par des butées (40, 45).

7. Dispositif de changement de vitesse selon l'une des revendications précédentes, caractérisé en ce que les deux éléments de rotor (28, 29) sont en forme de douilles qui se recouvrent au moins partiellement dans leur extension axiale.
